# EUROPEAN PATENT APPLICATION

(11) **EP 2 722 610 A1**
(43) Date of publication of application: **23.04.2014**
(21) Application number: 13189166.5
(22) Date of filing: 17.10.2013
(51) Int. Cl.: F24H 8/00, F24H 1/40, F28D 7/00, F28D 7/16, F28F 1/02

(54) **Improved heat exchanger for condensing boilers**

(30) Priority: 22.10.2012 IT BO20120573
(71) Applicant: Valmex S.p.A., 61030 Lucrezia di Cartoceto (PU) (IT)
(72) Inventor: Capodagli, Severino, 61032 Fano (PU) (IT)
(74) Representative: Provvisionato, Paolo

(57) **Abstract**

A heat exchanger for condensing boilers comprises a hollow body through which flue gases pass when in use, within which there is a first plurality of central tubes (2) which are parallel to each other and define a central mixed heat exchange zone and a second plurality of condensation tubes (7) which are parallel to each other and different from the central tubes (2), forming a condensation zone. The cross-sections of the condensation tubes (7) are elongated along a major axis (Y-Y).

## Description

This invention relates to an improved heat exchanger for condensing boilers.

Boilers generally have a heat exchanger in which the fluid which has to be heated flows through a tube bundle around which the flue gases from the boiler flow and is heated as the gases cool. Both the primary heat developed as a result of combustion and the latent heat of condensation of the water vapour present in the flue gases are made use of in condensing boilers. This is made possible by the fact that condensing boilers use heat exchangers constructed of materials that are particularly resistant to the acidity of the condensates.

A known type of heat exchanger for condensing boilers is described in WO 2011/048574 by the same applicant. This heat exchanger comprises a plurality of tubes of elliptical cross-section arranged in two rows passing through a plurality of thermal plates, spaced a constant distance apart, which form the heat exchange fins. The thermal plates are brazed to the elliptical tubes and together with them form the mixed dry/wetted heat exchange surface in a central mixed heat exchange zone of the exchanger. At the top of this known heat exchanger there are two tubes having an elliptical cross-section which form the wetted side walls cooling the combustion chamber. At the bottom of this known heat exchanger there are two rows of tubes of round cross-section close together which form a condensation zone within the flue gas chamber to recover the latent heat of the flue gases before they escape to discharge. Another known heat exchanger of a similar type is described in WO 2006/097959.

In heat exchangers for condensing boilers the condensation zone for recovery of the latent heat of the flue gases is particularly critical for obtaining good boiler efficiency. Acid condensate, which attacks the material of the tubes, forms and collects in this zone. In addition to this the formation of condensate on the tubes reduces flue gas/tube heat exchange in comparison with the heat exchange occurring when the tubes are dry. Finally the temperature and velocity of the flue gases in the condensation zone are low and the obstacle represented by the tube bundle may constitute a problem to achieving optimum performance, in addition to encouraging the progressive deposition of impurities, which consequently reduces performance. In addition to this, a constant requirement for heat exchangers is that they should be compact, especially in the vertical direction along which the flue gases flow, as well as being economical to manufacture.

The object of this invention is to improve known heat exchangers, making them more efficient, more compact and less expensive, and therefore in sum to overcome the abovementioned disadvantages and satisfy the needs and requirements mentioned previously. In order to achieve this object this invention relates to a heat exchanger for condensing boilers as defined in the appended claims.

In particular, in the heat exchanger according to this invention the condensation zone is defined by a plurality of tubes having an elongated or flattened cross-section, for example one which is elliptical, oval or flattened on parallel sides, in which there is a major axis. Such a tube cross-section in the condensation zone offers a greater exchange surface area than the round cross-section tubes of the known art, which is particularly advantageous specifically in the condensation zone, where for reasons associated with a high level of corrosion it is not to be recommended that cooling fins should be provided very close together, as is instead the case in the central mixed heat exchange zone of the heat exchanger. Also tubes having this elongated or flattened cross-section encourage less pooling of acid condensate on the tubes, thus improving heat exchange performance as a result of the film of condensate on the tubes being thinner or absent in comparison with the known art. Also such a configuration offers better flue gas flow, with consequent lesser deposition of impurities and the achievement of better cleaning and better performance from the heat exchanger and therefore the condensing boiler over time.

The tubes in the condensation zone of the exchanger may be located in one or more parallel ranks or rows, in which the tubes in each row have their longitudinal axes lying in the same plane transverse to the direction in which the flue gases flow.

The adjacent tubes in a given row may be offset with respect to each other to offer a greater exchange surface area to the flue gases without creating excessive head losses and without excessively increasing the height of the heat exchanger.

The tubes in the condensation zone may be arranged in such a way that the major axes of their cross-sections are orientated vertically, or in the same direction as the flue gases flow, in order to offer less resistance to the flow of flue gases. As an alternative the tubes may be arranged with their major axes inclined with respect to the direction of the flue gases, in order to reduce the height of the heat exchanger. In the case where there are several rows of tubes, the major axes of the rows above or below may be inclined by the same angle or a different angle, and may be in line or offset.

According to one aspect of the invention, the tubes in the condensation zone each have a cross-section of smaller area than the cross-section of each of the tubes located in the central mixed heat exchange zone of the exchanger.

According to another aspect of the invention the tubes in the condensation zone are closer together than the tubes located in the central mixed heat exchange zone of the exchanger.

According to a further aspect of the invention the tubes in the condensation zone, unlike the tubes located in the central heat exchange zone, have no cooling fins.

According to yet another aspect of the invention, the tubes in the condensation zone have elliptical cross-sections, the tubes respectively located on the two sides of a longitudinal plane of symmetry in the heat exchanger having the major axes of their elliptical cross-sections inclined by symmetrical angles with respect to the plane of longitudinal symmetry. One or more condensation tubes may also be located centrally, with their corresponding major axes aligned with the longitudinal plane of symmetry.

Further features and advantages will be apparent from the following description of preferred embodiments with reference to the appended figures, provided purely by way of a non-restrictive example, in which:
- Figure 1 is a longitudinal cross-section of a heat exchanger according to this invention,
- Figure 2 is a cross-section along the line II-II in Figure 1,
- Figure 3 is a perspective view of a group of condensation tubes in the heat exchanger in Figures 1 and 2,
- Figures 4 to 6 show transverse cross-sections of alternative configurations of the groups of condensation tubes according to this invention,
- Figures 7 to 9 show variants of the offset configuration of the group of condensation tubes according to this invention,
- Figures 10 to 12 show further variants of the heat exchanger according to this invention.

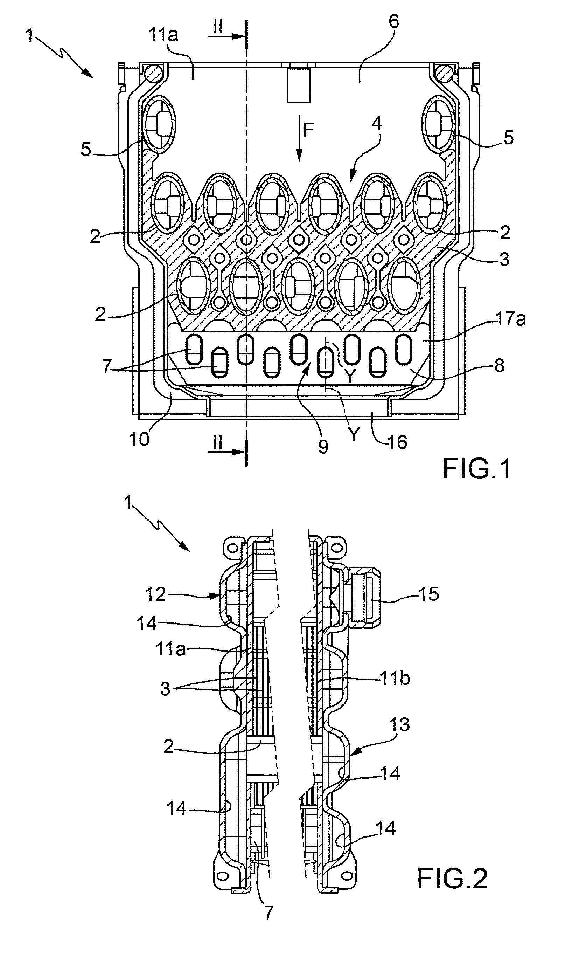

With reference now to Figure 1, a heat exchanger according to this invention comprises a hollow body 1 through which flue gases are intended to flow, within which there is located a group of central tubes 2 having a preferably elliptical cross-section passing through a plurality of thermal plates or fins 3, which are preferably regularly spaced apart. Central tubes 2 and thermal plates 3 are preferably of aluminium or aluminium alloy or stainless steel, and are welded to each other in order as a whole to form a mixed dry/wetted heat exchange surface in a central mixed heat exchange zone 4 of the heat exchanger. At the top of the exchanger, alongside a combustion chamber 6, there are two side tubes 5 having preferably elliptical cross-sections substantially similar to the central tubes 2 in central zone 4 which form the wetted cooling side walls of combustion chamber 6.

At the bottom of hollow body 1 there is a group of condensation tubes 7, also preferably of aluminium, aluminium alloy or stainless steel, which within a flue gas chamber 8 form a condensation zone 9 for the heat exchanger, in which the latent heat of condensation of the water vapour present in the flue gases is substantially recovered before they depart to a discharge opening 10. The ends of all the tubes, that is of central tubes 2, side tubes 5 and condensation tubes 7, are connected to two corresponding tube plates 11a, 11b, which form the lateral boundaries of hollow body 1 within which the flue gases are intended to flow downwards in the direction of arrow F in Figure 1. Outside tube plates 11a, 11b there are provided closing ends 12, 13 in which there are expanded portions 14 forming connecting chambers for central tubes 2, side tubes 5 and condensation tubes 7 in a known way in order to form a configuration for the flow of water through the heat exchanger which is admitted through an inlet opening (not illustrated in the figures) and which drains through an outlet opening 15. At the bottom of the heat exchanger there is a condensate delivery 16 for subsequent discharge in manners which are known to those skilled in the art.

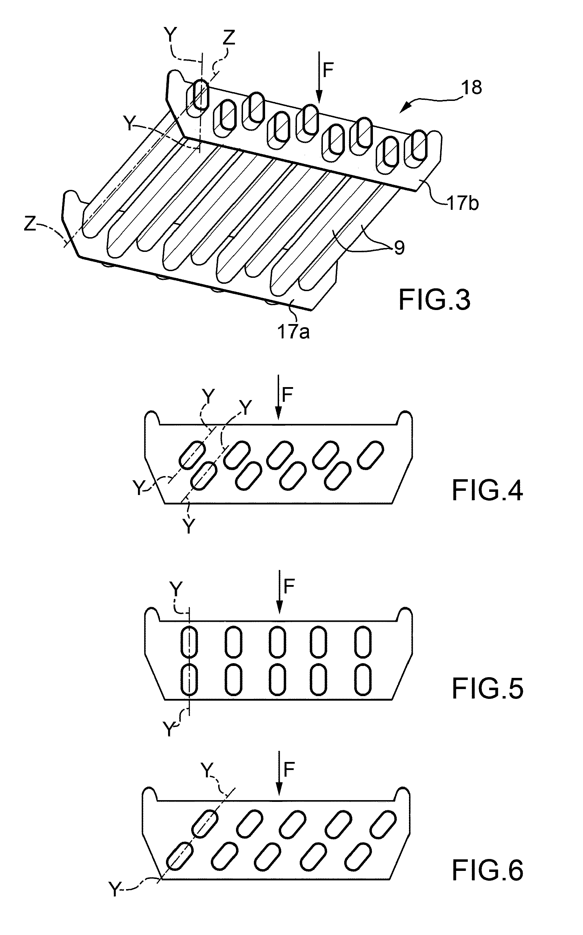

The group of condensation tubes 7 of the heat exchanger described above can be more clearly seen in Figure 3. In particular the group of condensation tubes 7 is preferably kept together by two end plates 17a, 17b, mounted close to the ends of condensation tubes 7 in such a way as to form a unitary group 18 which can easily be fitted in hollow body 1, in particular by abutting attachment to tube plates 11a, 11b. Each condensation tube 7 has a flattened cross-section with a principal major axis Y-Y located parallel to the direction of flow of flue gases F. Condensation tubes 7 are located with their corresponding straight longitudinal axes Z-Z all substantially parallel to each other and parallel to a horizontal plane at right angles to the vertical direction of flue gases F. Condensation tubes 7 are alternately offset in pairs with respect to the vertical, that is with respect to the direction of flow of flue gases F, in such a way as to alternate a condensation tube 7 located at a given first vertical height with an adjacent tube 7 located at a given second height in the vertical direction.

Condensation tubes 7 illustrated in the embodiment in Figures 1 to 3 have a cross-section comprising two opposite parallel sides joined by rounded end portions. The construction of tubes having oval or elliptical cross-section, or even an asymmetrical cross-section of the so-called "pear" type, that is all those cross-sections which differ from the circular cross-section in the sense that they have a flattening or elongation in one direction or a principal or major axis indicated in the figures as the Y-Y axis, also fall within the scope of the invention.

Other arrangements of flattened or elongated condensation tubes 7 are clearly possible. Figure 4 diagrammatically illustrates a configuration of unitary group 18 of condensation tubes 7 in which the major axes Y-Y of their cross-sections are inclined with respect to the vertical direction, that is to the direction of flue gases F. Such a configuration makes possible an appreciable reduction in the overall height of the heat exchanger, while retaining the advantageous characteristics of heat exchange and rapid drainage of condensate from condensation tubes 7 mentioned above. The angle of inclination of the major axis Y-Y of condensation tubes 7 is preferably less than 45° and is in any event such as not to form a substantial obstacle to the flow of flue gases.

In Figure 5 unitary group 18 has condensation tubes 7 arranged in two rows in such a way that the longitudinal axes Z-Z of condensation tubes 7 lie in two parallel planes respectively vertically separated in the direction of flue gases F. The major axes Y-Y of the tubes in one row are also vertically aligned with the major axes Y-Y of the tubes in the row above or below.

Figure 6 illustrates a further variant of unitary group 18 in which the tubes in each row have their own major axes Y-Y inclined by the same angle and in line with the equally inclined major axis Y-Y of the row of tubes above or below. Again in this case the angle of inclination of the major axis Y-Y of condensation tubes 7 is preferably less than 45° and is in any event such as not to constitute a substantial obstacle to the flow of flue gases.

Unitary group 18 of condensation tubes 7 preferably has no fins, but it may also be provided with further intermediate plates (not illustrated) in addition to end plates 17a, 17b, which are preferably regularly spaced along the longitudinal axis of condensation tubes 7 and preferably brazed to them, having the function of fins to improve heat exchange in condensation zone 9 and as stiffening members for unitary group 18 of condensation tubes 7. Of course, for the reasons indicated above, a person skilled in the art could select the number of such intermediate plates and their mutual positions in such a way as to not significantly increase head losses in comparison with the embodiment which has no intermediate fins illustrated in the figures and described in detail above. As a consequence the number of intermediate plates may generally be less than the number of thermal plates or fins 3 attached to central tubes 2.

The number of condensation tubes 7, and the number of parallel rows in which they are distributed, the inclination of the major axes Y-Y, and the greater or lesser offset between the condensation tubes 7 in a given row, as well as the different elongated or flattened cross-sections, preferably but not restricted to cross-sections having elongated parallel sides or oval or elliptical cross-sections, are subject to variations falling within the scope of protection which a person skilled in the art will know how to identify once he has understood the fundamental concept of this invention from the description above.

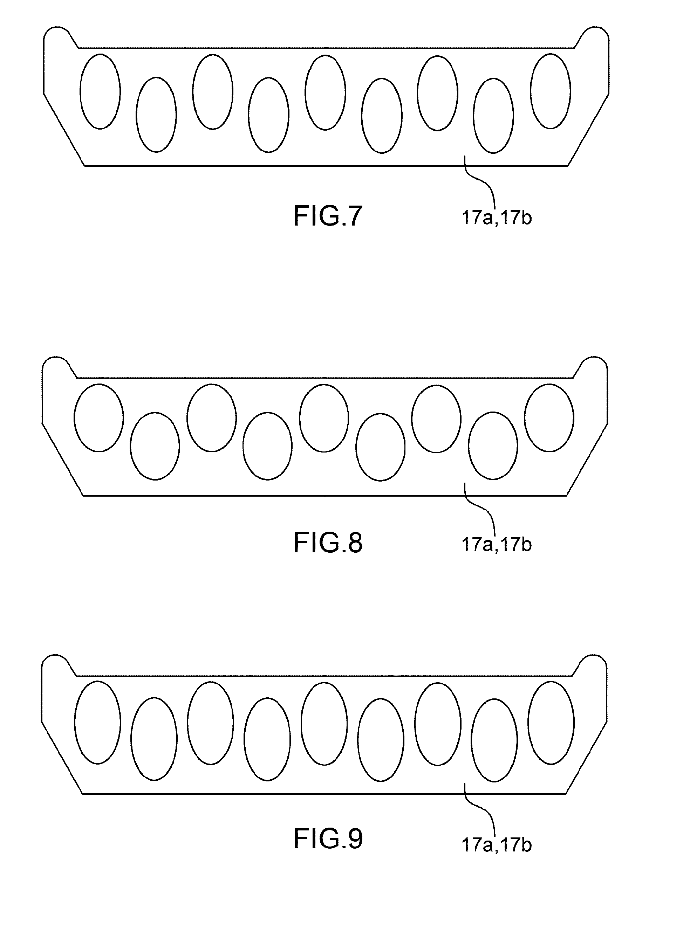

By way of example, Figures 7 to 9 illustrate variants of one of end plates 17a, 17b which determine the configuration of unitary group 18 of condensation tubes 7, which as may be seen from the relative openings in the illustrated end plates are offset and have an elliptical cross-section of various shapes.

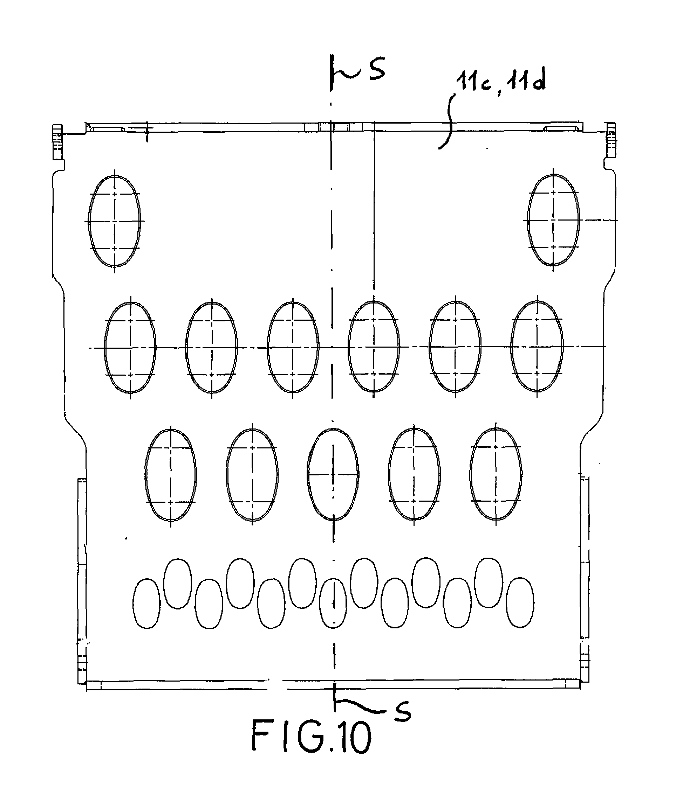

Figures 10 to 12 illustrate respectively three variants of one of tube plates 11c, 11d in a variant heat exchanger which incorporate in themselves both the function of tube plates 11a, 11b in Figure 1 and the function of end plates 17a, 17b. In other words tube plates 11c, 11d of the variants illustrated in Figures 10 to 12 are pierced to house the ends of both central tubes 2 and side tubes 5 as well as condensation tubes 7.

The embodiment in Figure 10 illustrates a variant configuration of condensation tubes 7 having an arrangement and cross-section similar to that illustrated in Figure 9, but in which condensation tubes 7 have oval cross-sections with more rounded extremities.

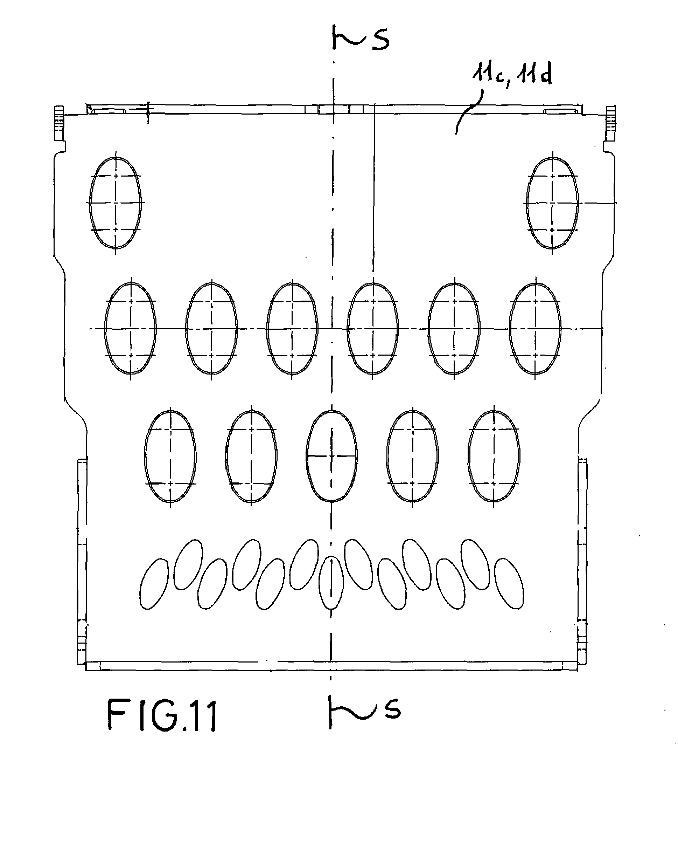

The embodiment in Figure 11 illustrates a variant configuration of condensation tubes 7 which have a more flattened oval cross-section than those in preceding Figures 7 to 10, and which resembles a spindle or lozenge with rounded corners. The arrangement of condensation tubes 7 is also symmetrically angled with respect to a longitudinal plane of symmetry S-S of tube plate 11c, 11d which is substantially parallel to the direction of flow of flue gases F. In particular, condensation tubes 7 located respectively on two sides of longitudinal plane of symmetry S-S of tube plate 11c, 11d and the heat exchanger have their corresponding respectively greater axes Y-Y inclined by respectively symmetrical angles with respect to that plane of longitudinal symmetry. The directions of the major axes Y-Y of condensation tubes 7 alongside longitudinal plane of symmetry S-S converge at a point above the group of condensation tubes 7, away from central tubes (2), therefore towards the interior of hollow body 1. A condensation tube 7a is located centrally with its major axis Y-Y in line and coinciding with longitudinal plane of symmetry S-S.

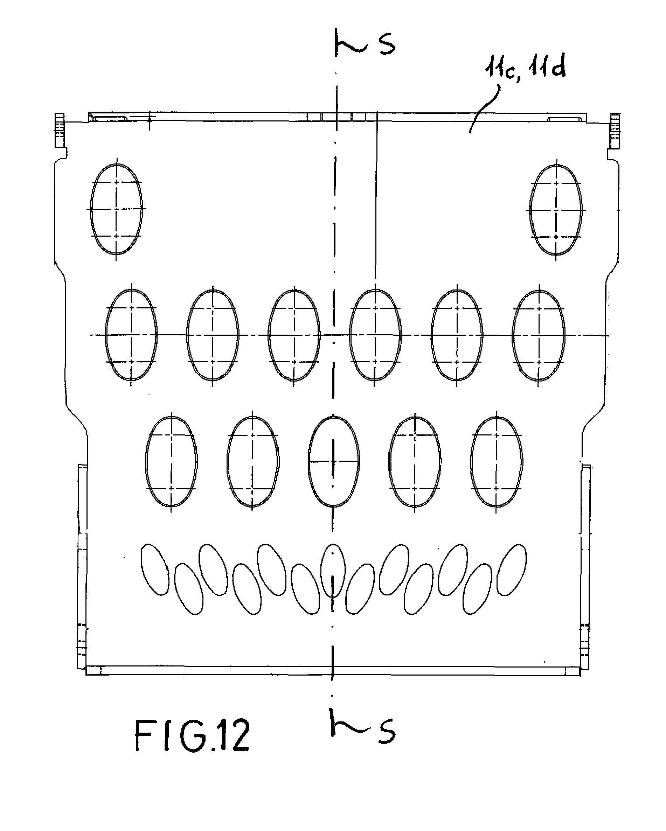

The embodiment in Figure 12 illustrates a variant configuration of condensation tubes 7, all corresponding to the configuration in Figure 11 except for the different orientation of condensation tubes 7. In particular the directions of the major axes Y-Y of condensation tubes 7 located alongside longitudinal plane of symmetry S-S converge at a point below the group of condensation tubes 7, opposite central tubes 2, that is towards the outside of hollow body 1. Again in this case a condensation tube 7a is located centrally with its major axis Y-Y in line and coinciding with longitudinal plane of symmetry S-S.

The condensation tubes according to this invention are therefore of the type having a cross-section which is generally elongated along a major axis, and which therefore differ from the circular cross-section in the sense that they have a flattening or elongation in one direction or a principal or major axis. The cross-sections of the condensation tubes may therefore for example, but without limitation, adopt an oval or elliptical shape, or a spindle or lozenge shape, with corners which are rounded to a greater or lesser extent, or even an asymmetrical shape of the so-called "pear" type.

As may be clearly seen in the examples in the figures, condensation tubes 7 are clearly different and distinct from central tubes 2 of the heat exchanger. These are distinguished by their shape and/or by the dimensions of their individual cross-sections, which are generally smaller than the cross-sections of each of the central tubes. They can also be distinguished by their spacing, being generally closer to each other than the central tubes, in such a way as to leave less space between one tube and another for the passage of flue gases, which are cooler and have a lower condensation temperature than the hotter ones bathing the central tubes. In addition to this the condensation tubes generally have no fins, while the central tubes are amply provided with them, although in some cases it may be convenient to provide some intermediate supporting or reinforcing plates for the condensation tubes which also act as fins, although in an appreciably fewer number than the fins of the central tubes.

Of course, without affecting the principle of the invention, the constructed shapes and details may vary widely without thereby going beyond the scope of this invention.

## Claims

1. A heat exchanger for condensing boilers comprising a hollow body through which flue gases pass when in use, within which there is located a first group of central tubes (2) that are parallel to each other and define a central mixed heat exchange zone (4) and a second group of condensation tubes (7) which are parallel to each other and different from the central tubes (2) and define a condensation zone (9), the cross-sections of the condensation tubes (7) being cross-sections which are elongated along a major axis (Y-Y).

2. A heat exchanger according to claim 1, in which the cross-section of the condensation tubes (7) is oval, elliptical or flattened with two substantially parallel walls.

3. A heat exchanger according to claim 1 or 2, in which the condensation tubes (7) each have a cross-section of smaller area than the cross-sections of each of the central tubes (2).

4. A heat exchanger according to any one of claims 1 to 3, in which the condensation tubes (7) are closer together than the central tubes (2).

5. A heat exchanger according to any one of claims 1 to 4, in which the condensation tubes (7) are alternately offset.

6. A heat exchanger according to any one of claims 1 to 5, in which the condensation tubes (7) are orientated with their major axes (Y-Y) substantially in line with the direction (F) in which the flue gases pass through the hollow body.

7. A heat exchanger according to any one of claims 1 to 5, in which the condensation tubes (7) are orientated with their major axes (Y-Y) inclined to the direction (F) in which the flue gases pass through the hollow body.

8. A heat exchanger according to any one of claims 1 to 5, in which the condensation tubes (7) respectively located on either side of a longitudinal plane of symmetry (S-S) of the heat exchanger, substantially parallel to the direction (F) in which the flue gases pass through the hollow body, have their respective major axes (Y-Y) inclined at respectively symmetrical angles with respect to the longitudinal plane of symmetry.

9. A heat exchanger according to claim 8, also comprising one or more condensation tubes (7) located centrally, with their corresponding major axes (Y-Y) in line with the longitudinal plane of symmetry.

10. A heat exchanger according to any one of the preceding claims, in which the group of condensation tubes (7) is distributed over two or more planes spaced apart in the direction (F) in which the flue gases pass through the hollow body.

11. A heat exchanger according to claim 10, in which the major axes (Y-Y) of the cross-sections of the condensation tubes (7) located in one plane are in line with the major axes (Y-Y) of the cross-sections of the condensation tubes (7) located in a plane above or below.

12. A heat exchanger according to any one of the preceding claims, in which the ends of the central tubes (2) and the condensation tubes (7) are connected to two respective tube plates (11a, 11b; 11c, 11d) which form the lateral boundaries of the hollow body (1) of the heat exchanger.

13. A heat exchanger according to any one of the preceding claims, in which the group of condensation tubes (7) is held together by two end plates (17a, 17b) mounted close to the ends of the condensation tubes (7) in such a way as to form a unitary group (18) which can be attached to the tube plates (11a, 11b).

14. A heat exchanger according to claim 9, in which the unitary group (18) comprises intermediate plates functioning as fins.
